# EUROPÄISCHE PATENTSCHRIFT

(11) **EP 2 634 597 B1**
(45) Veröffentlichungstag und Bekanntmachung des Hinweises auf die Patenterteilung: **22.06.2016**
(21) Anmeldenummer: 12001421.2
(22) Anmeldetag: 02.03.2012
(51) Int. Cl.: G01S 17/02, G01S 17/93, G01S 17/89

(54) **VERFAHREN ZUR DETEKTION VON HINDERNISSEN UNTER EINGESCHRÄNKTEN SICHTBEDINGUNGEN**
METHOD FOR DETECTING OBSTACLES IN RESTRICTED VISIBILITY
PROCÉDÉ DE DÉTECTION D'OBSTACLES DANS DES CONDITIONS DE VISIBILITÉ LIMITÉES

(43) Veröffentlichungstag der Anmeldung: 04.09.2013
(73) Patentinhaber: Airbus Defence and Space GmbH, 85521 Ottobrunn (DE)
(72) Erfinder: Münsterer, Thomas Dr., 88069 Tettnang (DE)
(74) Vertreter: Meel, Thomas

(56) Entgegenhaltungen:
- EP-A1- 2 418 510
- WO-A1-2004/072678
- WO-A1-2010/051615
- US-A- 5 343 284
- US-B1- 7 642 929
- Bradley Short: "3D Flash LADAR Helicopter Landing Sensor for Brownout and Reduced Visual Cue", , 1. Januar 2011 (2011-01-01), XP55035242, Gefunden im Internet: URL:http://www.virtualacquisitionshowcase. com/document/1375/briefing [gefunden am 2012-08-10]
- X. ZHU ET AL: "Lidar for obstacle detection during helicopter landing", PROCEEDINGS OF SPIE, Bd. 6950, 1. Januar 2008 (2008-01-01), Seiten 69500T-69500T-8, XP55035236, ISSN: 0277-786X, DOI: 10.1117/12.777160
- Christopher Centamore: "Advanced LADAR Imagery Augmentation Systems (ALIAS)", , 1. Januar 2011 (2011-01-01), XP55035246, Gefunden im Internet: URL:http://www.virtualacquisitionshowcase. com/document/1374/briefing [gefunden am 2012-08-10]

## Beschreibung

Die Erfindung betrifft ein Verfahren zur Detektion von Hindernissen unter eingeschränkten Sichtbedingungen in der Umgebung eines Luftfahrzeugs mittels eines luftfahrzeuggestützten aktiven 3D-Sensors.

Hubschrauberlandungen unter eingeschränkten Sichtverhältnissen stellen eine enorme körperliche und mentale Belastung für die Piloten dar und bergen ein stark erhöhtes Unfallrisiko. Dies gilt insbesondere für Nachtlandungen, Landungen bei Nebel oder Schneefall sowie Landungen in ariden Gegenden, die zum sogenannten Brownout führen. Dabei versteht man unter Brownout einen durch den Rotorabwind des Hubschraubers bedingten Effekt, der zu einem vollständigen Verlust der Außensicht innerhalb von Sekundenbruchteilen führen kann. Einen ähnlichen Effekt kennt man bei Landungen auf losem Schnee, der Whiteout genannt wird.

Im Folgenden wird die Erfindung und die zugrundeliegende Problematik der eingeschränkten Sicht exemplarisch anhand des Brownouts (d.h. Staub und Staubwolken) dargestellt. Die erfindungsgemäße Lösung ist jedoch universell in Situationen mit eingeschränkter Sicht anwendbar und kann z.B. auch beim WhiteOut, starkem Nebel etc. mit Erfolg angewandt werden.

Folgende Ansätze zur Unterstützung des Piloten speziell bei der Landung unter stark eingeschränkten Sichtbedingungen sind bekannt:
In der DE 10 2004 051 625 B4 wird ein allgemeiner Ansatz zur Lösung des Problems skizziert. Dieses Konzept beinhaltet die Verwendung eines hochauflösenden 3D-Sensors, z.B. eines Ladars, zur Erzeugung einer 3D-Repräsentation der Landezone während des Landeanflugs. Nach Eintritt des Brownouts werden keine neuen Daten mehr aufgenommen. Vielmehr werden die bestehenden Daten als synthetische Sicht der Landezone mit der Hubschrauberbewegung dargestellt. Eintretende Veränderungen in der Landezone, während sich der Hubschrauber in der Brownoutwolke befindet, können nicht mehr detektiert werden.

In der WO 2011/012102 A1 wird die Kombination des vorstehend erwähnten Verfahrens mit einem zusätzlichen staubdurchdringenden Radarsensor beschrieben. Der Integrationsaufwand wird durch den zusätzlichen Sensor erhöht. Außerdem sind Radarsensoren leicht von feindlichen Kräften detektierbar.

Vom US Airforce Research Lab (AFRL) ist ein Programm unter dem Namen "3D-LZ" bekannt, in dem ein neuartiger Ladar-Prototyp verwendet wird, der mit einer Multiecho-Methode das jeweils letzte empfangene Echo (sog. Last-pulse) dazu verwendet, die Bodenfläche oder massive Hindernisse durch Staub hindurch zu detektieren (siehe z.B. Z. Szoboszlay et. al., Landing an H-60 Helicopter in Conditions Using 3D-LZ Displays, Proc. of the American Helicopter Society, 2011). Nachteilig ist hier, dass die Messung von mehreren Echos pro ausgesandten Laserpuls (hier bis zu 16 Stück) mit einem erheblichen HW-Aufwand auf Empfängerseite verbunden ist. Darüber hinaus wird auch die zu verarbeitende Datenmenge erheblich vergrößert und das Erkennen und Segmentieren von realen Objekten auf Basis der Multiechos erfordert ausgefeilte Algorithmen und einen sehr großen Rechenaufwand. Diesen Anforderungen konnten bisher nicht erfolgreich in operationell verfügbaren, flugzugelassenen Systemen entsprochen werden. Weiterhin nachteilig ist die Tatsache, dass bei starken Sichtbehinderungen zunächst unklar bleibt, ob ein empfangenes letztes Echo von einem festen Hindernis (z.B. Boden oder Fahrzeug) herrührt oder ob ein weiteres Echo aufgrund der starken Streuung und Absorption in dem die Sichtbehinderung erzeugenden Medium nicht empfangen werden konnte.

Die Veröffentlichung Bradley Short: "3D Flash LADAR Helicopter Landing Senor for Brownout and Reduced Visual Cue", 1. Januar 2011, XP55035242 beschreibt den Einsatz von LIDAR-Systemen zur Hinderniserkennung, insbesondere zum Einsatz in Helikoptern sowie für die Unterwasser-Bildgebung.

US 5,343,284 A, die zur Abgrenzung der zweiteiligen Form verwendet wird, beschreibt den Einsatz von LIDAR-Systemen zur Erkennung von Unterwasserbedrohungen. Das eingesetzte LIDAR-System erfasst nur Ziele innerhalb eines definierten Abstandsbereichs. Gegenstände, die sich zwischen dem LIDAR-System und dem so definierten Abstandsbereich befinden, erscheinen im erzeugten Tiefenbild als Schattenbereiche, in denen keine Messwerte erhalten wurden. Das Tiefenbild wird hinsichtlich derartiger Schattenbereiche ausgewertet.
Der Erfindung liegt die Aufgabe zugrunde, das Verfahren nach der US 5,343,284 A derart fortzuentwickeln, dass erkannt werden kann, ob bei den gegebenen Sichtverhältnissen eine zuverlässige Hinderniserkennung im Nahbereich des mit dem aktiven 3D-Sensor (z.B. einem Ladar oder einem Radar) ausgestatteten Luftfahrzeug überhaupt noch möglich ist.
Diese Aufgabe wird mit dem Verfahren nach Patentanspruch 1 gelöst. Vorteilhafte Ausführungen sind Gegenstand von Unteransprüchen.
Mit der Erfindung wird eine verhältnismäßig leicht zu implementierende und zuverlässige Methode geschaffen, die eine Hindernisdetektion innerhalb der Brownout-Staubwolke, selbst bei vollständigem Verlust der Außensicht des Piloten ermöglicht. Somit können auch kurzfristige Veränderungen innerhalb der Landezone erkannt werden. Derartige Veränderungen der realen Objekte in der Staubwolke können zum Beispiel durch andere Luftfahrzeuge hervorgerufen werden, wenn es sich z.B. um sogenannte Formationslandungen handelt oder aber durch Fahrzeuge oder Personen, die in die Staubwolke eindringen, während sich der Hubschrauber noch in der Luft befindet.

Die Erfindung wird anhand konkreter Ausführungsbeispiele unter Bezugnahme auf mehrere Figuren erläutert. Es zeigen:
- Fig. 1:: Verschiedenen Phasen der Staublandung eines Hubschraubers;
- Fig. 2:: Prinzipskizze zur erfindungsgemäßen Erzeugung einer Ladarmessung in einer Staubwolke bei Vorhandensein eines Hindernisobjekts innerhalb der Blindzone des 3D-Sensors;
- Fig. 3:: Beispielhafte Darstellung eines mit einem Ladar-Sensor erzeugten Tiefenbilds mit dem Boden und einem darauf stehenden Hindernisobjekt;
- Fig. 4:: Schematische Darstellung einer Konturlinie der Hinderniskulisse, errechnet aus einem Tiefenbild (siehe Fig. 3).

Das erfindungsgemäße Verfahren beschreibt ein Verfahren zur Detektion von Hindernissen in einer Staubwolke, welche in die Landezone des Hubschraubers eindringen, diesen also potentiell gefährden. Bei Landungen von mittleren oder schweren Transporthubschraubern ist die gewählte Landezone in der Regel mindestens 80 x 80 m groß, mit dem eigentlichen Landepunkt in der Mitte. Diese ist frei von Hindernissen zu wählen, was von dem Piloten im Anflug noch einmal überprüft wird und von einem Ladarsensor bei nicht eingeschränkter Sicht (d.h. vor dem Eintritt in die Staubwolke) unterstützend überprüft werden kann (siehe z.B. das in der DE10 2004 051 625 B4 vorgeschlagene Verfahren).

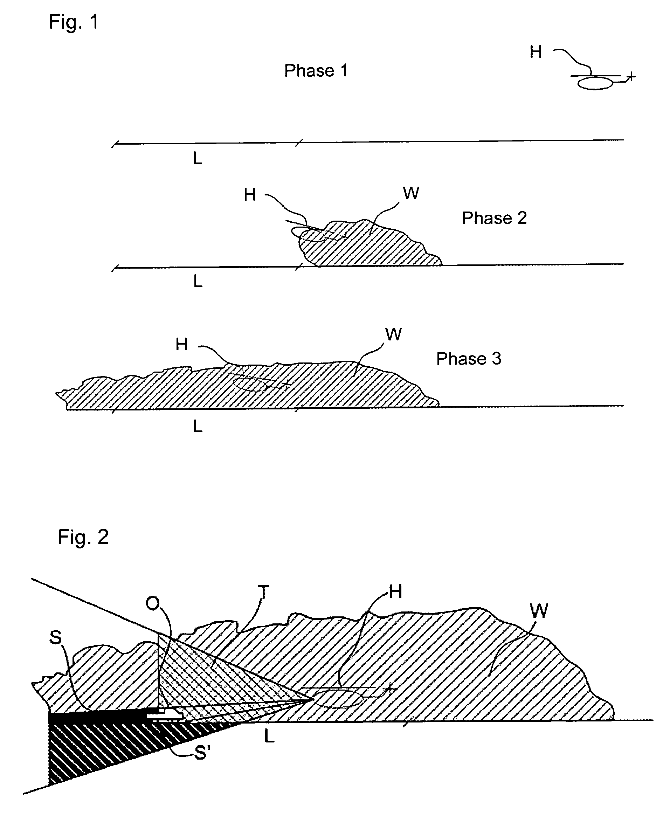

Fig. 1 zeigt in Phase 1 den Hubschrauber H, welcher in der Landezone L landen will. In Phase 1 weist er eine Höhe auf, in der noch keine Gefahr für die Entstehung einer Brownout-Staubwolke besteht. In Bodennähe wird der Hubschrauber eine Staubwolke W durch seinen Rotordownwash erzeugen und diese, solange seine Geschwindigkeit groß genug ist, hinter sich herziehen. Typischerweise erfolgt der Eintritt in die Staubwolke, sobald der Hubschrauber bodennah vor dem Landepunkt abbremst (Phase 2 in Fig. 1). Abhängig vom Hubschraubertyp erfolgt dies typischerweise bei Geschwindigkeiten unterhalb von 20 bis 30 Knoten in einer Höhe von 25 bis 30 Fuß. Die Landung selbst erfolgt in völliger Einhüllung durch die Staubwolke (Phase 3).

Ein in den Hubschrauber eingebauter aktiver 3D-Sensor (vorzugsweise ein Ladar) kann in den Phasen 1 und 2 ungehindert Messdaten von der Landezone und der Hindernisszenerie aufnehmen und unterstützend darstellen. Sobald der Hubschrauber und damit der 3D-Sensor in Phase 3 in die Staubwolke eingetaucht ist, wird die Mehrzahl der vom Ladar registrierten Echos jedoch von der Staubwolke stammen.

Das hier vorgestellte erfindungsgemäße Verfahren nutzt die Möglichkeit von Ladar-Sensoren, eine Blindzone um den Sensor zu erzeugen, innerhalb der keine Messwerte aufgenommen werden. Dies ist ein allgemein genutztes Verfahren, um Fehlmessungen im Nahbereich, z.B. durch Dunst oder Nebel zu unterdrücken. Das ist notwendig, da physikalisch bedingt die Energie eines Rückstreusignals von Objekten, je nach Objektausdehnung mit der dritten oder vierten Potenz des Abstands skaliert. Das heißt, dass Objekte im extremen Nahbereich eine um Größenordnungen höhere Rückstreuenergie erzeugen, als dieselben Objekte in einigen hundert Metern Entfernung. Durch die Schaffung einer Blindzone im Nahbereich können Fehlmessungen, zum Beispiel an atmosphärischen Rückstreuern, begrenzt werden. Typische Werte für die Blindzone eines zur Hinderniswarnung eingesetzten Ladars liegen bei 50 bis 100 Metern. Das heißt, dass erst ab einer Entfernung von 50 bis 100 Metern überhaupt Messwerte durch den Ladar-Sensor aufgenommen werden. Technisch wird dies z.B. so realisiert, dass der für die Entfernungsmessung des Ladars mittels Pulslaufzeitmessung eingesetzte Zähler erst nach einer bestimmten Zeit t, d.h. erst ab einem bestimmten Abstand triggerbar ist und erst nach Ablauf dieser Zeit von einem Echo durch Überschreiten einer Triggerschwelle angehalten werden kann und damit eine Entfernungsmessung erfolgt.

Das erfindungsgemäße Verfahren nutzt diese unmittelbar vor bzw. um den Ladar-Sensor befindliche Blindzone, um Objekte, wie z.B. Fahrzeuge oder andere Luftfahrzeuge, die in die Landezone nach Eintritt des Hubschraubers in die Wolke eindringen, zu detektieren.

Dabei wird erfindungsgemäß gerade nicht versucht, diese Objekte aus den gemessenen 3D-Messpunkten zu extrahieren, da dies, wie oben beschrieben, sehr komplex und aufwändig wäre. Vielmehr wird die Tatsache genutzt, dass ein innerhalb der Blindzone vorhandenes flächenhaftes Objekt sich im Gesichtsfeld (FOV) des Ladars, ähnlich wie bei einem Scherenschnitt, als (Messwert-freier) Schatten des Objekts vor den Hintergrund der vorhandenen Messwerte abzeichnet. Dies liegt daran, dass ein innerhalb der Blindzone vorhandenes flächenhaftes Objekt verhindert, dass ein entsprechender Messstrahl des Ladars in den eigentlichen Messbereich außerhalb der Blindzone propagieren kann.

Das Prinzip ist in Fig. 2 dargestellt. Der Hubschrauber H, der mit einem Ladarsensor ausgestattet ist, befindet sich in einer Wolke W, entweder kurz vor oder bereits innerhalb der Landezone L. In diese Landezone dringt jetzt ein Hindernisobjekt O ein, hier exemplarisch ein einfahrendes Fahrzeug. Das Ladar ist mit einer Blindzonen-Funktion ausgestattet, die verhindert, dass Messwerte unterhalb einer bestimmten Entfernung aufgenommen werden können. Dies führt dazu, dass Echos von Objekten, die sich innerhalb der Blindzone T befinden, den Zähler zur Entfernungsmessung nicht anhalten können. Die von dem Ladar-Sensor innerhalb eines vollständigen Scans über den gesamten Bildbereich (FOV) aufgenommene 3D-Messpunktmenge lässt sich als sogenanntes Tiefenbild darstellen, in dem jedem Bildpunkt statt eines Grauwerts ein Entfernungswert zugeordnet ist. In einem solchen Tiefenbild wird sich das eindringende Hindernisobjekt auf Grund des beschriebenen Effekts der Blindzone als ein Schattenbereich ohne zugehörige Entfernungswerte abzeichnen. Dies ist dadurch bedingt, dass ein flächenhaftes Hindernisobjekt die gesamte Energie des Messstrahls zurückreflektiert. Da das aber innerhalb der Blindzone T passiert, führen diese Echos zu keinem Anhalten des Zählers zur Entfernungsmessung und somit zu keinem Messwert im Tiefenbild. Der Umriss des Hindernisobjekts zeichnet sich im Tiefenbild als Region mit fehlenden Entfernungswerten ab, die einem eindeutigen Schattenbereich des Hindernisses entspricht. Schematisch ist der von Messungen ausgeschlossene Bereich in Fig. 2 als S bezeichnet.

Natürlich führt auch der Boden innerhalb der Blindzone zu einem Abschatten von weiteren Messwerten (Bereich S' in Fig. 2). Der gesamte oben erwähnte Schattenbereich wird sich also zunächst als Boden mit einer relativ gleichmäßigen, horizontalen Konturlinie im Tiefenbild abzeichnen, die durch das Hinzukommen von Hindernisobjekten charakteristisch verformt wird.

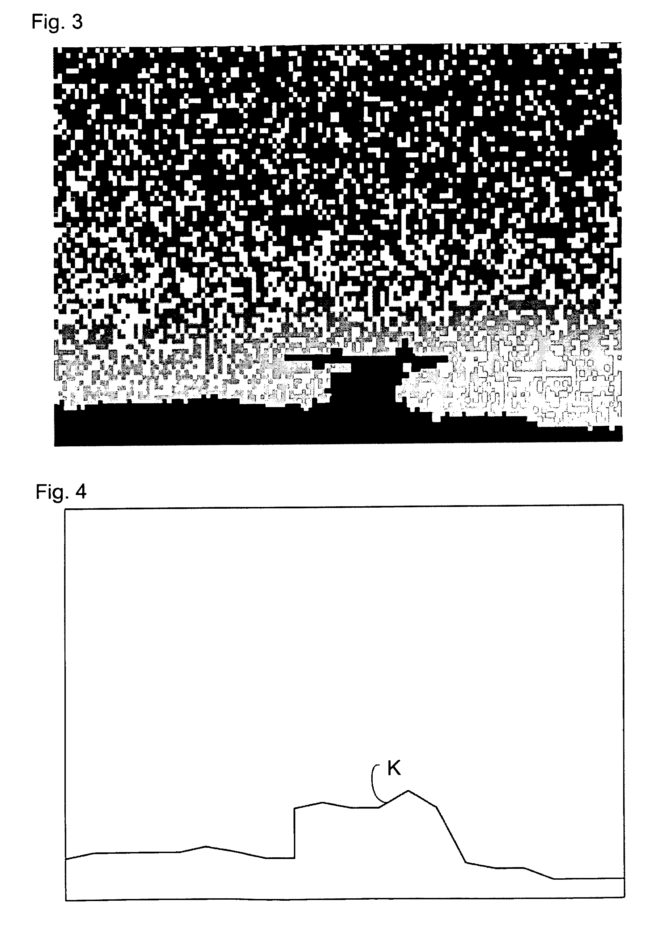

Die Fig. 3 zeigt ein solches Tiefenbild, in dem die gemessenen Entfernungswerte für die einzelnen Bildpixel in verschiedenen Grauwertstufen codiert sind. Man erkennt, dass die Werte durch Echos an den Staubpartikeln stark gestört sind. Pixel ohne Messwerte (im unteren Bereich des Bildes) werden schwarz dargestellt. Dies sind die beschriebenen Schattenbereiche. Pixel mit Messwerten außerhalb der maximalen Sensorreichweite erscheinen in dieser s/w-Darstellung ebenfalls schwarz (hier handelt es sich um die schwarzen Pixel, die fast die gesamte obere Hälfte des Bilds ausfüllen - sie sind in der Praxis zur Unterscheidung von den Pixeln ohne Messwert farbig, z.B blau dargestellt). Deutlich kann man in diesem Beispiel die Kontur eines am Boden stehenden Hubschraubers im Schattenbereich erkennen. Das erfindungsgemäße Verfahren überprüft nun nach dem Eintreten des Hubschraubers in die Wolke, ob sich aus der Kontur des Schattenbereichs ein sich innerhalb der Blindzone befindliches Hindernisobjekt abzeichnet und leitet daraus gegebenenfalls eine Warnung für den Piloten ab. Das bedeutet, dass man die bekannten Verfahren zur Hinderniswarnung mittels 3D-Sensoren praktisch umkehrt. Es wird nicht mehr versucht, ein mögliches Hindernis aus den 3D-Messwerten zu segmentieren, vielmehr wird eine Hindernisinformation aus dem Bereich mit fehlenden 3D-Messwerten gewonnen.

Diese Berechnung kann sehr einfach und effizient mit bekannten Verfahren der digitalen Bildverarbeitung erfolgen und ist somit weitaus effizienter und zuverlässiger durchführbar als eine Segmentierung eines Hindernisobjekts aus den - durch die Wolke stark verrauschten - 3D-Messwerten.

Exemplarisch seien hier einige an sich bekannte, für den erfindungsgemäßen Einsatz mögliche Algorithmen zur Extraktion des Schattenbereichs aus dem Entfernungsbild mittels digitaler Bildverarbeitung genannt. Eine Möglichkeit bietet sich beispielsweise durch Zusammenfassen, d.h. Clustern der Pixel ohne Messwert an. Diese Cluster werden anschließend zusammengefasst und die Randkurve zu den umgebenden existenten, potentiell verrauschten Messwerten ermittelt. Wenn diese Randkurve bestimmte Glattheitsbedingungen verletzt, d.h. Ausreißer nach oben zeigt, so wird eine Warnung erzeugt. Ein weiteres Verfahren zur Ermittlung einer solchen Randkurve ist in der Fachliteratur als aktive Kontur oder "Snake" bekannt. Dabei ermittelt ein Algorithmus eine Objektkontur mittels Minimierung von positiven und negativen Energietermen von verschiedenen möglichen Konturlinien. Bestimmte Kontureigenschaften (z.B. Glattheit, Kontinuität etc.) werden in diesem Verfahren positiv gewertet (Energiegewinn), während andere negativ gewertet werden (Sprünge, steile Gradienten, etc.) (Energieverlust).

In einer besonders vorteilhaften Ausführung des erfindungsgemäßen Verfahrens kann das erzeugte Tiefenbild mit einem approximierten weiteren Tiefenbild verglichen werden, das auf der Basis des von Ladar während des Anflugs aufgenommenen Strukturen von Boden und eventuell vorhandenen erhabenen Objekte der Landezone erzeugt wurde. Man ermittelt also, welches Tiefenbild am derzeitigen Ort des Hubschraubers mit der derzeitigen Lage im Raum die bereits im Anflug vermessene Bodenstruktur liefern würde. Ein bildverarbeitungstechnischer Vergleich mit dem realen Tiefenbild kann dann neu eingedrungene Hindernisobjekte vorteilhaft noch besser erkennen und hervorheben.

Die erfindungsgemäße Nutzung kann auch noch dadurch verbessert werden, dass der die Blindzone definierende Abstand vor dem Eintauchen in die Brownoutwolke vergrößert wird (z.B. von 50 m auf 80 m), so dass ein größerer Bereich der Landezone überwacht werden kann. All diese Werte korrespondieren sehr gut mit den Mindestvoraussetzungen für Hindernisfreiheit bei der Landung, welche einen 80 x 80 Meter großen Bereich vorschlagen, in dessen Mittelpunkt der Hubschrauber landen soll.

Eine weitere erfindungsgemäße Variante sieht ein zyklisches Vergrößern und wieder Verkleinern des die Blindzone definierenden Abstands vor, wodurch der Bereich vor dem Hubschrauber mit dem Sensor auf Hindernisfreiheit abgescannt werden kann.

Das erfindungsgemäße Verfahren hat den weiteren Vorteil, dass es die geforderte Hindernisdetektion auch erreichen kann, wenn die Staubwolke sehr dicht ist. Einzige Voraussetzung ist, dass aus dem Bereich außerhalb der Blindzone überhaupt noch Echos zurück zum Sensor kommen. Dies ist ein signifikanter Vorteil des erfindungsgemäßen Verfahrens gegenüber dem beschriebenen Verfahren gemäß Stand der Technik mit Mehrfachecho-Detektion, welche eine statistisch signifikante Anzahl an Echos außerhalb der Blindzone benötigen, um die Echos von realen Hindernissen von denen des Staubs segmentieren zu können.

Das erfindungsgemäße Verfahren ermöglicht eine sehr einfache Überprüfung, ob, abhängig von der optischen Dichte der Staubwolke, überhaupt noch eine ausreichende Hindernisdetektion möglich ist. Dies geschieht dadurch, dass überprüft wird, ob sich außerhalb der Blindzone Messwerte in ausreichender Zahl ermitteln lassen. Ist dies der Fall, so lässt sich ein eindeutiges Schattenbild erzeugen und eine Hinderniswarnung ist möglich. In extremsten Wolken mit Sichtweiten unterhalb von wenigen Metern kann man keinerlei Echos außerhalb der Blindzone von z.B. 50 m Entfernung mehr erwarten und eine Schattenbildung durch Hindernisobjekte wird nicht mehr erfolgen. Dies kann dann auf einfachste Weise durch das Fehlen jeglicher gültiger Messwerte erkannt werden.

Ein weiterer Vorteil der Erfindung ist es, dass sie auch zur Detektion des frontalen Driften des Helikopters auf ein Hindernisobjekt hin genutzt werden kann. Eine undetektierte Drift mit ihren Folgen, wie Kollision mit Hindernissen am Rand der Landezone oder ähnlichem gilt als ein Hauptrisiko bei einer Landung.
Analog zur Detektion von in die Landezone eindringenden Hindernissen können auch statische Hindernisse im Sichtbereich des Ladars detektiert werden. Da die Landezone vom Piloten als hindernisfrei zu wählen ist und der die Blindzone definierende Abstand vom 3D-Sensor vorteilhaft etwa mit der halben Landezonenausdehnung gewählt wird (d.h. der Abstand zwischen dem Zentrum der Landezone und dem äußeren Rand der Landezone), bedeutet eine Hindernisdetektion im Sichtbereich des Ladars in so einem Fall entweder, dass ein Hindernis in die Landezone eingedrungen ist oder, dass sich der Hubschrauber, ohne es selbst zu bemerken, auf das Hindernis zubewegt hat. Beides würde operationell zu einem sofortigen Durchstarten zur Kollisionsvermeidung führen.

Eine weitere Variante besteht darin, das Ladar während der Anflugphase zur Datenaufnahme der Landezone zu nutzen und diese vorher aufgenommenen Daten dann in der Phase eingeschränkter Sicht gemäß der DE10 2004 051 625 B4 für eine synthetische Außensicht zu verwerten, erfindungsgemäß nun jedoch ergänzt um die erfindungsgemäße Warnung vor in die Landezone aktuell eindringenden Hindernissen. Durch das erfindungsgemäße Verfahren wird die bisher existierende Einschränkung der DE10 2004 051 625 B4, die die Datenaufnahme auf die Phasen 1 und 2 gem. Fig. 1 einschränkt, aufgehoben und das Ladar kann auch in der Staubwolke nutzbringende Informationen liefern.

Die Mensch-Maschinen-Schnittstelle für eine aus dem erfindungsgemäßen Verfahren gewonnene Warnung vor einem eindringenden Hindernis kann vorteilhaft als Sektorwamung vor dem Hubschrauber, eventuell blinkend dargestellt, angezeigt werden. Ebenfalls kann eine solche Warnung mittels Einfärbung eines Sektors in einer synthetischen Sicht oder eines Quadranten in Relation zur Hubschrauberlängsachse angezeigt werden. Die Anzeigekonzepte können sich dabei an den bekannten Warnanzeigen vor feindlichen Bedrohungen im militärischen Umfeld orientieren.

Eine weiterer möglicher Anwendungsfall des beschriebenen Verfahrens ist die Nutzung im langsamen Vorwärtsflug, z.B. wenn der Hubschrauber unbeabsichtigt in eine dichte Nebelbank eingeflogen ist (sog. Unintended Flight into IMC). Eine zuverlässige Hindernisdetektion mit dem Ladar ist bei zu geringen Sichtweiten in einer Wolke bei Sichtweiten deutlich unter einigen Hundert Metern, mit heute bekannten Systemen aufgrund der extrem hohen Zahl an Messechos vom Nebel nicht möglich. Das erfindungsgemäße Verfahren kann hier durch die Analyse von vorhandenen Schattenbereichen sowohl eine zuverlässige Warnung vor dem Boden als auch vor erhabenen Objekten bieten, die in den Warnbereich vor dem Hubschrauber, d.h. der voreingestellten Blindzone, eindringen.

Die Darstellung der detektierten Hindernisse kann in einer besonders vorteilhaften Ausführung in Form einer Konturlinie geschehen. Darunter versteht man, dass in eine synthetische Sicht (aus der Perspektive des Piloten) der Umgebung eine linienartige Struktur eingefügt wird, die geometrisch den hindernisbehafteten Raum vom hindernisfreien Raum trennt. Die Konturlinie liegt also auf der geometrischen Kontur der Hinderniskulisse bis zu einer festgelegten Entfernung auf. Im Gegensatz zu bisherigen Anwendungen der Konturlinie werden für die relevante Hinderniskulisse nicht die 3D-Messwerte verwendet, sondern deren Fehlen durch Abschattung innerhalb der Blindzone. Eine derartige Anzeige erscheint sowohl für den langsamen Vorwärtsflug in starkem Nebel, als auch für die Hinderniswarnung in der Brownoutwolke oder Whiteoutwolke vorteilhaft.

Fig. 4 zeigt hierfür ein Beispiel in schematischer Darstellung. Man erkennt eine Konturlinie K, errechnet aus einem Tiefenbild, wie in Fig. 3 dargestellt. Deutlich zeichnet sich das Hindernis in der Bildmitte vom gleichmäßig verlaufenden Boden im Rest des Bildes ab. Eine vorteilhafte Ausprägung zur Verringerung der Arbeitslast des Piloten ist die Darstellung der Konturlinie nur in solchen Fällen, in denen eine Erhebung, d.h. ein Hindernis erkennbar ist.

In der obigen Beschreibung wurde als aktiver 3D-Sensor insbesondere ein Ladar eingesetzt. Alternativ kann jedoch auch ein hochauflösendes Radar, vorzugsweise ein Millimeterwellen-Radar, verwendet werden.

## Patentansprüche

1. Verfahren zur Detektion von Hindernissen unter eingeschränkten Sichtbedingungen in der Umgebung eines Luftfahrzeugs mittels eines luftfahrzeuggestützten aktiven 3D-Sensors, wobei von dem 3D-Sensor ein Tiefenbild der Umgebung erzeugt wird, wobei Echos aus einer Blindzone im Nahbereich des 3D-Sensors bis zu einem vordefinierten Abstand zum 3D-Sensor nicht berücksichtigt werden, und wobei zur Hindernisdetektion das so generierte Tiefenbild auf Schattenbereiche, in denen keine Messwerte vorhanden sind, analysiert wird, welche sich durch in der Blindzone vorhandenen Hindernisse im Tiefenbild ergeben, **dadurch gekennzeichnet, dass** die Häufigkeit von Messwerten außerhalb der Schattenbereiche als Kriterium genutzt wird, ob eine Hindernisdetetektion aufgrund der aktuellen Sichtbedingungen überhaupt noch möglich ist.

2. Verfahren nach Anspruch 1, **dadurch gekennzeichnet, dass** der die Blindzone definierende Abstand fortlaufend, z.B. zyklisch verändert wird.

3. Verfahren nach Anspruch 1 oder Anspruch 2, **dadurch gekennzeichnet, dass** die ermittelte Hinderniskulisse dem Piloten durch eine Konturlinie in einer synthetischen Ansicht dargestellt wird.

4. Verfahren nach einem der vorangehenden Ansprüche, angewandt bei Landungen unter Brownout- oder Whiteout-Bedingungen, **dadurch gekennzeichnet, dass** die detektierten Hindernisse dem Piloten in einer synthetischen Ansicht angezeigt werden, wobei für die Erzeugung der synthetischen Ansicht zusätzlich Geländedaten verwendet werden, die mittels des 3D-Sensors während des Landeanflugs vor dem Einsetzen des Brownouts oder Whiteouts erzeugt wurden.

5. Verfahren nach einem der vorangehenden Ansprüche, angewandt bei Landungen unter Brownout oder Whiteout-Bedingungen, **dadurch gekennzeichnet, dass** zur verbesserten Hinderniserkennung das erzeugte Tiefenbild mit einem bereits vorhandenen Tiefenbild identischer Perspektive verglichen wird, wobei dieses vorhandene Tiefenbild ermittelt wurde aus Umgebungsdaten, die während des Landeanflugs vor dem Einsetzen des Brownouts oder Whiteouts erzeugt wurden.

## Claims

1. Method for detecting obstacles under limited visibility conditions in the environment of an aircraft by means of an aircraft-supported active 3D sensor, wherein the 3D sensor generates a depth image of the environment, wherein echoes from a blind zone in the vicinity of the 3D sensor up to a predefined distance from the 3D sensor are not taken into account, and wherein for the purposes of obstacle detection, the thus generated depth image is analysed for shadow regions in which no measurement values are present and which are in the depth image as a result of obstacles located in the blind zone, **characterized in that** the frequency of measurement values outside the shadow regions is used as a criterion as to whether, based on the current visibility conditions, obstacle detection is still possible at all.

2. Method according to Claim 1, **characterized in that** the distance that defines the blind zone is changed continuously, for example cyclically.

3. Method according to Claim 1 or Claim 2, **characterized in that** the ascertained obstacle backdrop is presented to the pilot by way of a contour line in synthetic vision.

4. Method according to one of the preceding claims, used in landings under brownout or whiteout conditions, **characterized in that** the detected obstacles are presented to the pilot in synthetic vision, wherein terrain data that was generated by means of the 3D sensor during the landing approach before the brownout or whiteout started is used additionally to generate the synthetic vision.

5. Method according to one of the preceding claims, used in landings under brownout or whiteout conditions, **characterized in that** for improved obstacle detection, the generated depth image is compared to an already present depth image of an identical perspective, wherein this present depth image was ascertained from environment data that was generated during the landing approach before the brownout or whiteout started.

## Revendications

1. Procédé de détection d'obstacles dans des conditions de visibilité réduite dans l'environnement d'un aéronef au moyen d'un capteur tridimensionnel actif soutenu par l'aéronef,
le capteur tridimensionnel formant une image en relief de l'environnement,
des échos provenant d'une zone aveugle à proximité du capteur tridimensionnel n'étant pas pris en compte jusqu'à une distance prédéfinie du capteur tridimensionnel,
les zones d'ombre dans lesquelles aucune valeur de mesure n'est présente et situées dans l'image en relief à cause d'obstacles présents dans la zone aveugle étant analysées dans l'image en relief ainsi produite en vue d'y détecter des obstacles,
**caractérisé en ce que**
la fréquence des valeurs de mesure à l'extérieur des zones d'ombre est utilisée comme critère pour savoir si une détection des obstacles est encore possible dans les conditions de visibilité qui prévalent.

2. Procédé selon la revendication 1, **caractérisé en ce que** la distance qui définit la zone aveugle est modifiée en permanence, par exemple cycliquement.

3. Procédé selon la revendication 1 ou la revendication 2, **caractérisé en ce que** la coulisse d'obstacle ainsi déterminée est présentée au pilote par une ligne de contour dans une vue synthétique.

4. Procédé selon l'une des revendications précédentes, utilisé pour l'atterrissage dans des conditions dites de "brown out" ou de "white out", **caractérisé en ce que** les obstacles détectés sont affichés au pilote dans une vue synthétique, des données supplémentaires d'atterrissage étant utilisées pour former la vue synthétique et étant formées au moyen du capteur tridimensionnel pendant l'approche d'atterrissage, avant l'établissement de la situation de "brown out" ou de "white out".

5. Procédé selon l'une des revendications précédentes, utilisé pour l'atterrissage dans des conditions dites de "brown out" ou de "white out", **caractérisé en ce que** pour une meilleure détection des obstacles, l'image en relief formée est comparée à une image en relief existante sous une perspective identique, cette image en relief existante ayant été déterminée à partir des données d'environnement qui ont été formées pendant l'approche d'atterrissage avant l'établissement de la situation de "brown out" ou de "white out".
